# EUROPEAN PATENT SPECIFICATION

(11) **EP 2 869 956 B1**
(45) Date of publication and mention of the grant of the patent: **26.12.2018**
(21) Application number: 13742760.5
(22) Date of filing: 01.07.2013
(51) Int. Cl.: B23C 5/10, B23C 3/12

(54) **BEVELING TOOL FOR METAL**
ANSCHRÄGWERKZEUG FÜR METAL
OUTIL DE BISEAUTAGE POUR MÉTAL

(30) Priority: 04.07.2012 KR 20120073019; 11.06.2013 US 201361956558 P
(43) Date of publication of application: 13.05.2015
(73) Proprietor: Bevel Tools Holding B.V., 6883 JN Velp (NL)
(72) Inventor: PARK, Chang Woo, Bangbae-2 dong 946-17 (KR); DIECKILMAN, Thomas, M., Carlsbad, CA 92010 (US)
(74) Representative: De Vries & Metman
(86) International application number: PCT/NL2013/000038
(87) International publication number: WO 2014/007609

(56) References cited:
- BG-A1- 19 649
- CH-A1- 701 414
- DE-A1-102008 034 784
- DE-U1-202006 006 114
- JP-A- H0 871 831
- JP-A- H06 226 522
- JP-A- S61 252 015
- US-A- 4 572 714
- US-A- 6 048 142
- US-A1- 2005 025 584
- US-B1- 7 103 950

## Description

### Technical Field

The present invention relates to a beveling tool according to the preamble of claim 1, more commonly described as a router head for metal, which fits on standard power tools and forms the edge of a work piece more uniformly than previous tools by means of on a unique multiple blade and discharge channel cutting head design.

Such a beveling tool is known from US 6 048 142 A.

### Background Art

The beveling machines of the related art include a drive unit and a power transmission unit in a main body having a handle and a spindle mounted on a head unit and rotated by power from the power transmission unit.

A cutter head is mounted on the free end of the spindle and a flange plate is installed between the cutter and the spindle by means of a case, a guide shaft, and a ball bearing.

In beveling tools with such a configuration, the edge of a work piece is aligned with the cutter, the driving unit in the body is driven by a power transmission unit, and the driving force rotates the spindle through the power transmission unit. With the rotation of the spindle, the cutter at the free end is rotated and machines the edge of the work piece while rotating.

When the edge of a work piece is machined with previous tools, however, beveling machines have a problem in that the work piece and the cutter come in contact with each other, the spindle chatters, which can result in an imperfect edge finish and the internal parts can be damaged by a shock due to the chattering and result in rapidly wearing tools.

A chamfering cutter, similar to the invention cutter for beveling machines includes a body with a shaft hole formed through the center, a plurality of cutter blades extending at regular intervals with a helix angle of 1 to 40 degrees around the shaft hole on the outer circumferential surface of the body while having both sides that are beveling sides, discharge grooves formed longitudinally between the cutter blades to discharge chips formed in beveling. As such, it is possible to discharge chips even if long plane chips are produced and to machine an edge uniformly when beveling.

### Disclosure of Invention

### Problem to be solved by the Invention

In order to eliminate problems with the cutters of the beveling machines of the related art, one objective of the present invention is to provide a beveling tool that can machine a surface to a uniform shape with a uniform surface whenever beveling a work piece.

Another objective of the present invention is to provide a beveling tool that can easily discharge chips formed while beveling a work piece without generating sparks when discharging.

Another objective of the present invention is to provide a beveling tool that can minimize damage to the cutting blades and reduce the work load when beveling.

### Means for Solving Problem

In order to achieve the objectives the present invention provides a beveling tool according to claim 1.

A protruded post at the top of the cutter with a threaded hole for coupling to a bearing may be formed at a side of the shank, which is a main part of the present invention, and a threaded hole for coupling to an electric tool may be formed at the opposite side of the shank.

The bearing on the top may be mounted on the protruded post by fitting the bearing onto the post and then tightening a fixing screw into the threaded hole.

### Effect of the Invention

With a beveling tool such as that described as the present invention, since the radial primary relief angle and the radial secondary relief angle range from 10 to 20 degrees and from 25 to 45 degrees respectively, there are advantages in that it is possible to reduce load generated while beveling a work piece and prevent machining interference and chattering by ensuring a sufficient gap between the work piece and the radial primary blades.

Additionally, with a beveling tool such as in an embodiment, since the honed portion is preferably formed at a side of the radial primary blade, there is the advantage in that it is possible to prevent the cutter blades from breaking and chattering.

With a beveling tool such as the present invention, since the cutter blades have an edge angle ranging from 15 to 60 degrees, preferably without a helix angle, there are also advantages in that it is possible to perform more precise machining on a work piece and improve surface finish of the work piece.

### Brief Description of Drawings

FIG. 1 is a plan view showing a beveling tool according to an embodiment of the present invention;
FIG. 2 is a perspective view showing the combination status of a beveling cutter and a shank which are main parts of the present invention;
FIG. 3 is a plan view showing a beveling tool according to another embodiment of the present invention; and
FIG. 4 is a perspective view showing the combination status of a beveling cutter and a shank which are main parts of the present invention.
FIG. 5 Shows the beveling tool mounted on a power tool and forming the interior and exterior edge of a work piece.

### Best Mode(s) of Carrying Out the Invention

In the following and in line with the embodiments of the present invention, beveling tools will be described in detail with reference to the accompanying drawings.

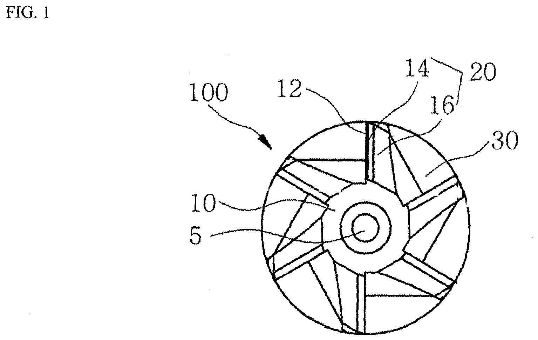

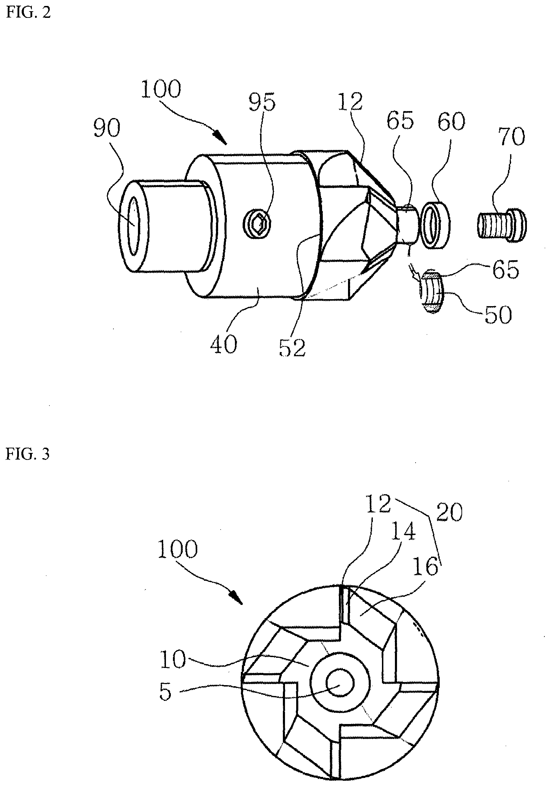

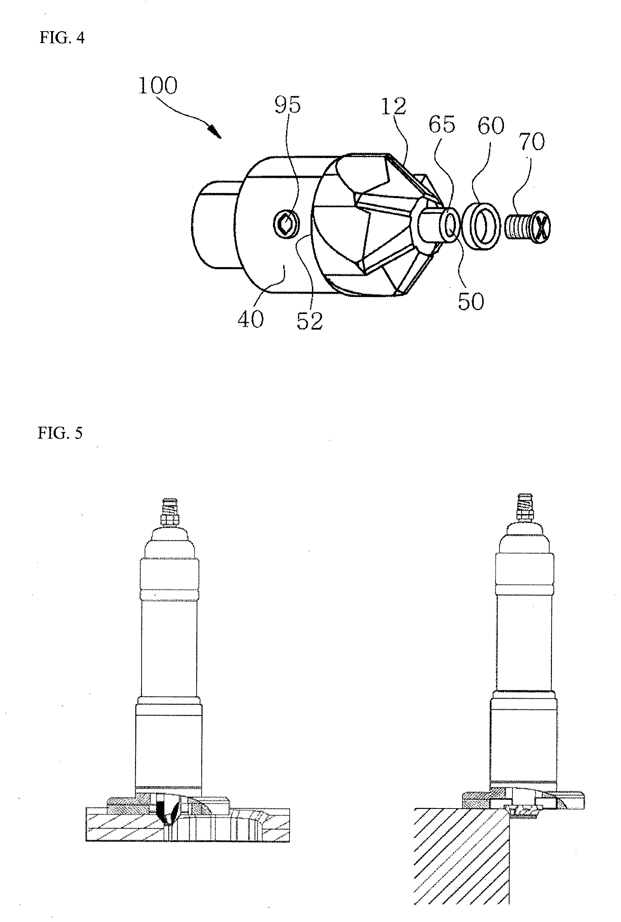

FIG. 1 is a plan view showing a beveling tool according to an embodiment of the present invention, FIG. 2 is a perspective view showing the combination status of a beveling cutter and a shank which are main parts of the present invention, FIG. 3 is a plan view showing a beveling cutter according to another embodiment of the present invention, and FIG. 4 is a perspective view showing the combination status of a beveling cutter and a shank which are main parts of the present invention.

Beveling tool 100 in the form of an embodiment of the present invention, as shown in FIGS. 1 and 2 includes a body 10, a plurality of cutter blades 20 arranged at predetermined distances on the circumferential surface of the body 10, discharge grooves 30 formed longitudinally between the cutter blades 20 to discharge chips produced in beveling, and a shank 40 inserted in the shaft hole 5 of the body 10.

The body 10, as shown in FIG. 1, has a shaft hole 5 formed through the center and six cutter blades 20 arranged at predetermined distances. The cutter blades 20 each has a radial primary blade 14 with a radial primary relief angle ranging from 10 to 20 degrees and a radial secondary blade 16 with a radial secondary relief angle ranging from 25 to 35 degrees. The width of the radial primary blade 14 ranges from 0.7 to 0.8mm and the width of the radial secondary blade 16 ranges from 2.2 to 2.3mm.

The radial primary relief angle is selected to an optimal angle, 10 to 20 degrees, to reduce load in the beveling of a work piece (not shown). The optimal angle for the radial primary relief angle is selected to provide optimal conditions for breaking and cutting a work piece.

Honed portions 12 are formed by honing a side of the radial primary blades 14 at an angle ranging from 1 to 45 degrees to prevent the cutter blades 20 from breaking or chattering. Although the honed portions 12 may be 0.05 to 0.2mm wide, it is preferable to make them 0.1mm wide.

The radial secondary relief angle is selected to an optimal angle, 25 to 35 degrees, to prevent machining interference and chattering by ensuring a sufficient gap between a work piece and the radial primary blade 14 in beveling. The radial secondary relief angle is angle data based on various tests for smooth cutting.

The cutter blades 20 are straight or with a helix angle and the edge angle is 15 to 60 degrees. The edge angle may be understood as the meaning of a beveling angle.

The shank 40 is formed in a cylindrical shape with several steps needed to be inserted in the shaft hole 5 of the body 10 of the cutter 20. The shank 40 is inserted in the shaft hole 5 of the body 10 and then brazed, such that the joint 52 is formed.

As shown in FIG. 2, a protrusion 65 with a threaded hole 50 for coupling to a bearing 60 is formed at a side of the shank 40, and a threaded hole 90 for coupling to an electric tool is formed at the opposite side of the shank 40. The bearing 60 is mounted on the protrusion 65 by fitting the bearing 60 onto the protrusion 65 and then tightening a fixing bolt 70 into the threaded hole 50. Further, a wrench portion 95 is formed at the center of the shank 40 for easy attachment/detachment of a beveling tool.

Another embodiment of such a beveling tool in the present invention is different from the embodiment described above in that four cutter blades 20 are provided, as shown in FIGS. 3 and 4. Further, the radial secondary relief angle is selected within the range of 35 to 45 degrees, different from the embodiment described above. The radial secondary relief angle changes because four cutter blades 20 are provided. The other factors, including the radial primary relief angle, are similar to those in the embodiment described above, so a detailed description is not provided.

The description below shows how to mount the beveling tool of the present invention with the configuration described above on an air tool or an electric tool and to bevel a work piece.

The beveling tool 100 in the embodiment of the present invention is fastened to an air tool or an electric tool (not shown) by inserting and fitting a rotary shaft of the air tool or the electric tool into the threaded hole 90 at the opposite side of the shank 40. With the beveling tool 100 fastened to an air tool or an electric tool, when the beveling tool 100 is brought in contact with a work piece (not shown) and the power switch is turned on the drive unit operates and rotates the cutter blades 20 of the beveling tool 100.

As the cutter blades 20 rotate, beveling on the work piece starts.

Chips (not shown) that are produced by the beveling surfaces of the cutter blades 20 are discharged through the discharge grooves 30 in beveling the work piece. Further, the cutter blades 20 are generally coated, so that the chips are easily discharged without damaging the surfaces of the cutter blades 20.

Since the cutter blades 20 have the honed portion 12 on a side of the radial primary blade 14, the cutter blades 20 can be prevented from breaking and the surface finish of the work piece can be improved in beveling the work piece. Further, small particles are sintered in the honed portion 12, so that beveling can be implemented by the cutter blades with very sharp lines even in high-speed rotation while the lifespan of the cutter blades 20 can be considerably increased and high-quality surfaces can be achieved.

Since the radial primary blade 14 has a radial primary relief angle ranging from 10 to 20 degrees, the load generated in beveling can be reduced. Further, since the radial primary blades 14 have the radial primary relief angle, it is possible to not only reduce damage to the cutter blades, but provide optimal conditions for cutting. Further, since the radial secondary relief angle of the radial secondary blade 16 connected with the radial primary blade 14 ranges from 25 to 35 degrees, a sufficient gap is ensured between the work piece and the radial primary blade 14 in beveling and thus machining interference and chattering can be prevented. In addition, the cutter blades 20 can smoothly move in the cutting direction due to the radial secondary relief angle. This embodiment of the present invention was configured to coincide with the demands of users by changing the number of the cutter blades to four. Further, the operation of the beveling tool according to this embodiment of the present invention is almost similar to that of the embodiment described above and thus not mentioned here.

Beveling tools of the present invention are not limited to the embodiments described above. The present invention may be modified in various ways by those skilled in the art without departing from the scope of the present invention, which is defined in the claims, and it should be understood that such modifications are included in the scope of the present invention.

### Industrial Applicability

The beveling tool of the present invention is available for various types of beveling machines equipped with a cutter, in addition to cutters for machining edges of a work piece and straight surfaces as well.

### Explanations of Letters or Numerals

| | |
|---|---|
| 5: Shaft hole | 10: Body |
| 14: Radial primary blade | 16: Radial secondary blade |
| 20: Cutter blade | 30: Discharge groove |
| 40: Shank | 50: 90: Threaded hole |
| 60: Bearing | 65: Protrusion |

## Claims

1. A beveling tool (100) including a body (10) with a shaft hole (5) formed through the center, a plurality of cutter blades (20) having an edge angle ranging from 15 to 60 degrees and arranged at predetermined distances on the circumferential surface of the body (10), discharge grooves (30) formed longitudinally between the cutter blades (20) to discharge chips produced in beveling, and a shank inserted in the shaft hole of the body, wherein the body and the shank are connected, and **characterized in that** each blade (20) has a radial primary blade (14) with a radial primary relief angle ranging from 10 to 20 degrees and a radial secondary blade (16) with a radial secondary relief angle ranging from 25 to 45 degrees.

2. The beveling tool (100) of claim 1, wherein the width of the radial primary blade (14) ranges from 0.7 to 0.8mm and the width of the radial secondary blade (16) ranges from 2.2 to 2.3mm.

3. The beveling tool (100) according to any one of the preceding claims, wherein a protrusion (65) with a threaded hole (50) for coupling to a bearing (60) is formed at a side of the shank (40) and a threaded hole (90) for coupling to an electric tool is formed at the opposite side of the shank (40).

4. The beveling tool (100) according to claim 3, wherein the bearing (60) is mounted on the protrusion (65) by fitting the bearing (60) onto the protrusion (65) and then tightening a fixing bolt (7) into the threaded hole (50).

5. The beveling tool (100) according to any one of the preceding claims, wherein a wrench portion (95) is formed at the center of the shank (40) for easy attachment/detachment of the beveling tool.

6. The beveling tool (100) according to any one of the preceding claims, wherein honed portions (12) are formed by honing a side of the radial primary blades (14) of the cutter blades (20) at an angle ranging from 1 to 45 degrees.

7. The beveling tool (100) according to claim 6, wherein the width of the honed portions (12) ranges from 0.05 to 0.2mm.

8. The beveling tool (100) according to any one of the preceding claims, wherein a shank (40) is inserted in the shaft hole (5) of the body (10) and wherein the body (10) and the shank (40) are mechanically attached by means of a center connecting screw, brazing or adhesive.

## Patentansprüche

1. Ein Anfaswerkzeug (100), welches einen Körper (10) mit einem Schaftloch (5), das durch die Mitte geformt ist, eine Mehrzahl von Schneidklingen (20), welche einen Klingenwinkel in einem Bereich von 15 bis 60 Grad haben und mit vorbestimmten Abständen an der Umfangsfläche des Körpers (10) angeordnet sind, Ausgabenuten (30), welche längs zwischen den Schneidklingen (20) geformt sind, um beim Anfasen erzeugte Späne auszugeben, und einen Schaft aufweist, welcher in das Schaftloch des Körpers eingesetzt ist, wobei der Körper und der Schaft verbunden sind, und **dadurch gekennzeichnet, dass** jede Klinge (20) eine Radial-Primärklinge (14) mit einem Radial-Primär-Freiwinkel in einem Bereich von 10 bis 20 Grad und eine Radial-Sekundärklinge (16) mit einem Radial-Sekundär-Freiwinkel in einem Bereich von 25 bis 45 Grad hat.

2. Das Anfaswerkzeug (100) gemäß Anspruch 1, wobei die Breite der Radial-Primärklinge (14) in einem Bereich von 0,7 bis 0,8 mm liegt und die Breite der Radial-Sekundärklinge (16) in einem Bereich von 2,2 bis 2,3 mm liegt.

3. Das Anfaswerkzeug (100) gemäß irgendeinem der vorhergehenden Ansprüche, wobei ein Vorsprung (65) mit einem Gewindeloch (50) zum Kuppeln mit einem Lager (60) an einer Seite des Schafts (40) geformt ist und ein Gewindeloch (90) zum Kuppeln mit einem Elektrowerkzeug an der entgegengesetzten Seite des Schafts (40) geformt ist.

4. Das Anfaswerkzeug (100) gemäß Anspruch 3, wobei das Lager (60) am Vorsprung (65) durch Aufsetzen des Lagers (60) auf den Vorsprung (90) und dann Anziehen einer Fixierschraube (70) in dem Gewindeloch (50) angebracht ist.

5. Das Anfaswerkzeug (100) gemäß irgendeinem der vorhergehenden Ansprüche, wobei ein Schlüsselabschnitt (95) an der Mitte des Schafts (40) zum einfachen Anbringen/Lösen des Anfaswerkzeugs geformt ist.

6. Das Anfaswerkzeug (100) gemäß irgendeinem der vorhergehenden Ansprüche, wobei gehonte Abschnitte (12) durch Honen einer Seite der Radial-Primärklingen (14) der Schneidklingen (20) mit einem Winkel in einem Bereich von 1 bis 45 Grad geformt sind.

7. Das Anfaswerkzeug (100) gemäß Anspruch 6, wobei die Breite der gehonten Abschnitte (12) in einem Bereich von 0,05 bis 0,2 mm liegt.

8. Das Anfaswerkzeug (100) gemäß irgendeinem der vorhergehenden Ansprüche, wobei ein Schaft (40) in das Schaftloch (5) des Körpers (10) eingesetzt ist und wobei der Körper (10) und der Schaft (40) mittels einer zentralen Verbindungsschraube, einer Lötung oder Klebstoff mechanisch befestigt sind.

## Revendications

1. Outil de biseautage (100) comportant un corps (10) avec un trou d'arbre (5) formé à travers le centre, une pluralité de lames de fraise (20) ayant un angle de coupe allant de 15 à 60 degrés et agencées à des distances prédéterminées sur la surface circonférentielle du corps (10), des rainures d'évacuation (30) formées longitudinalement entre les lames de fraise (20) pour évacuer des copeaux formés lors du biseautage, et une tige insérée dans le trou d'arbre du corps, dans lequel le corps et la tiges sont raccordés, et **caractérisé en ce que** chaque lame (20) a une lame principale radiale (14) avec un angle de dépouille principal radial allant de 10 à 20 degrés et une lame secondaire radiale (16) avec un angle de dépouille secondaire radial allant de 25 à 45 degrés.

2. Outil de biseautage (100) selon la revendication 1, dans lequel la largeur de la lame primaire radiale (14) va de 0,7 à 0,8 mm et la largeur de la lame secondaire radiale (16) va de 2,2 à 2,3 mm.

3. Outil de biseautage (100) selon l'une quelconque des revendications précédentes, dans lequel une protubérance (65) avec un trou fileté (50) pour s'accoupler à un palier (60) est formée d'un côté de la tige (40) et un trou fileté (90) pour s'accoupler à un outil électrique est formé du côté opposé de la tige (40).

4. Outil de biseautage (100) selon la revendication 3, dans lequel le palier (60) est monté sur la protubérance (65) en ajustant le palier (60) sur la protubérance (65) puis en serrant un boulon de fixation (7) dans le trou fileté (50).

5. Outil de biseautage (100) selon l'une quelconque des revendications précédentes, dans lequel une portion de clé (95) est formée au centre de la tige (40) pour attacher et détacher facilement l'outil de biseautage.

6. Outil de biseautage (100) selon l'une quelconque des revendications précédentes, dans lequel des portions rodées à la pierre (12) sont formées en rodant à la pierre un côté des lames principales radiales (14) des lames de fraise (20) selon un angle allant de 1 et 45 degrés.

7. Outil de biseautage (100) selon la revendication 6, dans lequel la largeur des portions rodées à la pierre (12) va de 0,05 à 0,2 mm.

8. Outil de biseautage (100) selon l'une quelconque des revendications précédentes, dans lequel une tige (40) est insérée dans le trou d'arbre (5) du corps (10) et dans lequel le corps (10) et la tige (40) sont attachés mécaniquement au moyen d'une vis de raccordement central, d'un brasage ou d'un adhésif.
